# EUROPÄISCHE PATENTSCHRIFT

(11) **EP 4 037 899 B1**
(45) Veröffentlichungstag und Bekanntmachung des Hinweises auf die Patenterteilung: **06.05.2026**
(21) Anmeldenummer: 20771903.0
(22) Anmeldetag: 21.09.2020
(51) Int. Cl.: B32B 9/04, B32B 1/00, B32B 7/023, B32B 9/00, B32B 27/06, B32B 27/20, B32B 27/36, E04F 13/14, E04F 15/08

(54) **LED-BELEUCHTUNGSELEMENTE AUF BASIS VON MEHRSCHICHTKÖRPERN MIT STEINOPTIK**
LED ILLUMINATION ELEMENTS BASED ON MULTILAYER BODIES WITH STONE APPEARANCE
ÉLÉMENTS D'ÉCLAIRAGE À DEL À BASE DE CORPS MULTICOUCHE À L'APPARENCE DE PIERRE

(30) Priorität: 30.09.2019 EP 19200443; 08.04.2020 DE 202020101944 U
(43) Veröffentlichungstag der Anmeldung: 10.08.2022
(73) Patentinhaber: Covestro Deutschland AG, 51373 Leverkusen (DE)
(72) Erfinder: THUST, Torsten, 42929 Wermelskirchen (DE); SCHULZ, Thorsten, 51371 Leverkusen (DE); HAGEN, Rainer, 51369 Leverkusen (DE); PIERMATTEO, Ciro, 51369 Leverkusen (DE); ROGOWSKI, Marius, 50226 Frechen (DE); BERGER, Armin, 40764 Langenfeld (DE); HELMIG, Jan, 41541 Dormagen (DE)
(74) Vertreter: Levpat
(86) Internationale Anmeldenummer: PCT/EP2020/076244
(87) Internationale Veröffentlichungsnummer: WO 2021/063718

(56) Entgegenhaltungen:
- WO-A1-2017/069497
- WO-A1-2019/020478
- JP-A- 2002 205 500

## Beschreibung

Die Erfindung betrifft einen beleuchtbaren Mehrschichtkörper mit einer aus einem thermoplastischen Material bestehenden Trägerschicht und einer Gesteinsschicht, aufweisend eine Stein-Optik.

Im Bereich der Innenarchitektur von Gebäuden als auch von Automobil-Interieur besteht das Bestreben, Oberflächen mit einer Naturoptik zu versehen. Insbesondere der Eindruck von Holz und Stein schafft eine Atmosphäre von Behaglichkeit, Naturnähe und gehobene Modernität. Stein ist insofern als Oberfläche interessant, da die Schwere, Massivität, die dieses Material ausstrahlt, Luxus suggeriert. Granitelemente beispielsweise als Waschbeckeneinfassung, Arbeitsplatte in Küchen, Boden- oder Wandverkleidung sind, sofern sie gewählt werden, aufgrund der Kosten des Materials tatsächlich ein Luxuselement. Gleichzeitig erschweren sie aufgrund des hohen Eigengewichts die Installation. Es besteht ein Bedarf an Gestaltungselementen mit Steinoptik. Um das Gewicht entsprechender Elemente zu reduzieren, wurden in der Vergangenheit Elemente entwickelt, bei denen statt eines massiven Steinelementes ein Mehrschichtkörper eingesetzt wird, bei dem die Dicke der Steinschicht reduziert ist und zur Stabilisierung stattdessen eine Trägerschicht vorgesehen ist.

Aus der DE 102005038022 A1 beispielsweise ist ein Verbundwerkstoff mit einer formnachgiebigen, aus Kunststoff hergestellten Trägerschicht bekannt, der ohne Klebeschicht mit einer lichtdurchlässigen Natursteinschicht verbunden ist. Die Verwendung des Verbundwerkstoffes als Verkleidungselement insbesondere zur Wand- oder Fassadenverkleidung ist offenbart.

In dem deutschen Gebrauchsmuster DE 202006013010 U1 ist ein flexibles Flachmaterial mit einer Natursteinoberfläche beschrieben, welches neben einer Steinschicht eine flexible Trägerschicht aufweist, wobei das Flachmaterial mit einer Klebeschicht zur Befestigung auf einem Untergrund versehen ist, denn die Verwendung des Flachmaterials als Bodenbelag, aber auch als Verkleidungselement für Wandflächen, Möbel etc. zur Schaffung von dekorativen, massiv wirkenden Steinoberflächen ist vorgesehen.

Auch die WO 2000/068530 A1 beschreibt einen mehrschichtigen Formkörper mit einer Trägerschicht, die eingefärbt ist, und einer oberflächlich sichtbaren, dünnen Natursteinschicht, die durch eine besondere Farbintensität besticht, geprägt durch die Farbe der Trägerschicht. Der Formkörper ist vorzugsweise formnachgiebig, wobei das Korngefüge der Natursteinschicht aufgelöst ist. Der Formkörper weist eine transparente Deckschicht auf, die dem Formkörper trotz des aufgelösten Korngefüges der Natursteinschicht eine homogene, glatte und ggf. auch glänzende Oberfläche verleiht. Als mögliche Verwendungen sind insbesondere Wandpaneele, für den Außen- und den Innenbereich, sowie Autoarmaturenbretter genannt.

WO 2004/052561 A1 beschreibt ein Verfahren zur Herstellung eines Mehrschichtkörpers mit einer Gesteinsschicht, bei dem Polymer auf ein Steinelement aufgebracht wird, das dann an die Oberfläche bindet und zusammen mit einer Schicht Gestein von dem Steinelement abgezogen wird. Auf der Sichtseite des Mehrschichtkörpers kann eine Versiegelung vorgesehen sein. Der Mehrschichtkörper weist gegenüber einer massiven Steinplatte derselben Dicke ein deutlich reduziertes Gewicht auf. Die Nutzbarkeit der Mehrschichtkörper für Fußbodenbeläge und Wandpaneele ist beschrieben.

JP 2002 205500 A offenbart eine Reihe von mehrschichtigen Körpern zur Raumbeleuchtung mittels LED-Technik. Die Dekorlage kann auch ein dünnes Steinmaterial umfassen.

Ebenfalls ein wesentlicher Aspekt in der Interieurgestaltung, sowohl bei Automobilen als auch im Architekturbereich, ist die Ausstattung mit Licht. Neben herkömmlichen Lampen, auch solchen mit Design-Anspruch, werden Beleuchtungselemente unauffällig in Wand-, Schrank- oder Bodenbereiche integriert.

Aus dem Stand der Technik ist bereits bekannt, die Steinoptik mit einem Lichtelement zu kombinieren. So beschreibt WO 2009/110870 A1 ein Furnier aus einer 0,3 bis 1,5 mm dünnen, noch lichtdurchlässigen, Gesteinsschicht auf einer transparenten, transluzenten oder opaken Trägerschicht, welche aus einem Glas, einem Polycarbonat oder einem anderen geeigneten Material besteht, wobei das Element einer Vielzahl von Anwendungen zugeführt werden kann, u.a. ist auch eine Beleuchtung von der Rückseite aus genannt.

Es besteht aber weiterhin Bedarf nach alternativen Dekor- oder Funktionselementen mit Steinoptik, welche ein möglichst ansprechendes Tag/Nacht-Design aufweisen und ein unter Berücksichtigung der angedeuteten Hochwertigkeit der Oberfläche möglichst geringes Eigengewicht aufweisen. Zudem sollte bevorzugt bei solchen Dekor- und Funktionselementen mittels neuer digitaler Lichttechnologien eine hohe Variabilität der Lichteffekte sowie eine Personalisierbarkeit ermöglicht werden. Aufgabe war es somit, ein entsprechendes Element bereitzustellen.

Die Aufgabe wird erfindungsgemäß gelöst durch eine LED-Beleuchtungseinheit, umfassend
a) einen Mehrschichtkörper und
b) eine LED-Lichtquelle,
wobei der Mehrschichtkörper die folgende Schichten in dieser Reihenfolge umfasst:
a1) eine Trägerschicht aus einer thermoplastischen Zusammensetzung,
a2) eine Steinschicht,
a3) eine transparente Schicht aus einer thermoplastischen Zusammensetzung mit einer über die gesamte Fläche gemittelten Dicke von 1 bis 6 mm, welche auf der Seite der Steinschicht a2 liegt, welche die Sichtseite des Mehrschichtkörpers in der LED-Beleuchtungseinheit darstellt,
   und
wobei die LED-Lichtquelle an mindestens einer Seitenkante der transparenten Schicht a3 so angeordnet ist, dass die transparente Schicht a3 als Lichtleiter für von der LED-Lichtquelle abgestrahltes Licht nutzbar ist.

Dabei wird "LED-Beleuchtungseinheit" nicht nur im engen Sinne eines Paketes aus mechanisch verbundenen Einzelteilen verstanden, sondern auch breiter als bloße Kombination (lediglich) funktionell zu einer Einheit verbundener Einzelteile. Ebenso kann es sich aber um eine mechanisch verbundene Kombination handeln. Unter "LED-Beleuchtungseinheit" wird erfindungsgemäß jede Vorrichtung, jedes System verstanden, das einen funktional mit einer LED-Lichtquelle verknüpften Mehrschichtkörper im erfindungsgemäßen Sinne aufweist. Es kann sich um Elemente zur Ausbildung von Fußbodenbelägen, zum Möbelbau, um Wand- oder Türpaneele, Teile einer Lampe und Beleuchtungselemente, ein Gehäuse von Haushalts- oder Elektrogeräten oder um Bauteile aus dem Automobilbereich, insbesondere aus dem Bereich der Automobilinnenraumgestaltung, wie Teile der Innenraumverkleidung, Teile von Armaturenbrettern, Teile von Instrumententafeln, Zierleisten, Einstiegsleisten, Teile von Armauflagen, Teile von Mittelkonsolen, handeln.

Die erfindungsgemäßen LED-Beleuchtungseinheiten weisen ein ansprechendes Tag/Nacht-Design auf. Ohne eingeschaltete LED sieht der Betrachter eine ansprechende, natürliche Steinoptik. Bei eingeschalteter LED-Leuchtquelle ergibt sich ein deutlich anderes Erscheinungsbild, denn durch die Kantenbeleuchtung der transparenten Komponente wird eine 3-dimensionale Topographie der Steinschicht erzeugt, abhängig vom verwendeten Steintyp zusätzlich mit glitzernden oder spiegelnden Elementen. Darüber hinaus ist auch die Kantenbeleuchtung mit einer Hinterleuchtung zu weiteren Lichtspielen kombinierbar.

"Mehrschichtkörper" im erfindungsgemäßen Sinn ist jeder Aufbau aus mehreren aufeinanderliegenden Schichten, der mindestens die Schichten a1, a2 und a3 umfasst. Es versteht sich, dass weitere Schichten, etwa an den Außenseiten des Mehrschichtkörpers, auf einer oder beiden flächigen Seiten des Mehrschichtkörpers, vorgesehen sein können, insbesondere eine Kratzfestschicht. "An der Außenseite des Mehrschichtkörpers" bedeutet hierbei die Seite der Trägerschicht a1 oder der transparenten Schicht a3, die der Seite, auf der die Steinschicht a2 liegt, gegenüberliegt.

Der Mehrschichtkörper weist die Gestalt einer Platte oder eine von einer Platte abweichende Geometrie auf. Eine Platte ist insbesondere bei Wandelementen, Fliesenelementen, Elementen für Bodenbeläge die übliche Gestalt. LED-Beleuchtungselemente mit einer von einer Platte abweichenden Geometrie, mit dreidimensional geformter Sichtfläche, kommen hingegen vorzugsweise bei Automobil-Interieur-Anwendungen, z.B. einem Autoarmaturenbrett, zum Einsatz. Dreidimensional geformte Teile können entweder direkt im Spritzguss, z.B. nach dem in den Beispielen erläuterten Herstellprozess, mit dreidimensional bearbeiteten Steinplatten gefertigt werden oder durch einen nachträglichen Thermoform-Prozess eines plattenförmigen Mehrschichtkörpers.

"Transparent" im Sinne der vorliegenden Erfindung bedeutet eine Transmission Ty, gemessen bei einer Dicke von 2 mm gemäß ISO 13468-2:2006 (D65, 10°), von bevorzugt mindestens 85 %, weiter bevorzugt von mindestens 86 %, besonders bevorzugt von mindestens 88 %, und vorzugsweise eine Trübung von weniger als 2,0 %, weiter bevorzugt von weniger als 1,5 %, noch weiter bevorzugt von weniger als 1,0 %, besonders bevorzugt von weniger als 0,8 %, bestimmt nach ASTM D1003:2013 bei einer Schichtdicke von 2 mm.

LED-Lichtquellen finden aufgrund ihrer hohen Lebensdauer, ihres geringen Energieverbrauchs und der guten Lichtausbeute vermehrt Anwendung, z.B. in der Automobilindustrie, Luftfahrt, Innenraumbeleuchtung, Fassadengestaltung etc. LED strahlen Licht mit einer vom Halbleitermaterial und der Dotierung abhängigen Wellenlänge ab, so dass mit LED annähernd monochromatisches Licht, auch im Infrarotbereich oder UV-Bereich, erzeugt werden kann.

Es gibt RGB-LED, welche rotes, grünes oder blaues Licht abstrahlen. Für weißes LED-Licht muss Licht unterschiedlicher Wellenlängen kombiniert werden. Dieses wird üblicherweise erreicht durch Kombination einer blauen, einer roten und einer grün abstrahlenden LED zu sogenannten RGB (Rot-Grün-Blau)-Modulen, deren kombinierter wahrgenommener Lichteindruck weiß sein kann, oder durch Lumineszenztechniken, bei denen die gesamte oder ein Teil der LED-Strahlung beispielsweise über Phosphore zu anderen Wellenlängen umgewandelt werden.

So kann weißes Licht, ausgehend von einer im sichtbaren Bereich blau leuchtenden LED, durch Zusatz eines einzigen Phosphors, der einen Teil der Strahlung im blauen Bereich in rot/gelbes Licht umwandelt, erzeugt werden. Diese Form der Erzeugung weißen Lichts ist für kommerzielle Anwendungen aus Kostengründen und aufgrund des hohen Wirkungsgrades von blauen LED bevorzugt.

Alternativ kann aus mit LED erzeugtem UV-Licht mit Hilfe dreier unterschiedlicher Phosphore, die Wellenlängen entsprechend einem RGB-Modul emittieren, weißes Licht erzeugt werden. Sofern diese Technik angewandt wird, werden Zusammensetzungen bevorzugt, die auch eine erhöhte Stabilität gegenüber UV-Strahlung aufweisen, also beispielsweise mit einer UV-Stabilisierung versehen sind.

Zur Einstellung eines von "weiß" abweichenden Gesamtfarbeindrucks in LED-Modulen können die obigen Lichtquellen aber auch nach Bedarf noch weiter modifiziert werden. Diese Modifizierung kann beispielsweise erfolgen durch:
- Kombination mit einem Phosphoreszenzfarbstoff oder
- Kombination mit zusätzlichen Lichtquellen mit einer anderen Emissionscharakteristik.

Grundsätzlich können erfindungsgemäß alle beschriebenen LED/LED-Techniken separat oder gemeinsam zum Einsatz kommen.

Als "LED-Lichtquelle" wird im Sinne der vorliegenden Erfindung eine Lichtquelle verstanden, die Licht aussendet, das eine Strahlungscharakteristik aufweist, bei der mehr als 70% der im Bereich von 200 nm bis 3000 nm abgegebenen Intensität im sichtbaren Bereich des Spektrums liegt. Im Sinne der vorliegenden Erfindung ist der sichtbare Bereich definiert als der Wellenlängenbereich von 360 nm bis 780 nm. Insbesondere bevorzugt liegen weniger als 5% der Intensität im Bereich < 360 nm. Bei Betrachtung des Bereichs von 360 nm bis 500 nm weist das LED-Licht im Rahmen der vorliegenden Erfindung eine Peakwellenlänge hinsichtlich seiner Intensität - also Wellenlänge der maximalen Intensität- von 360 nm bis 460 nm auf, weiter bevorzugt von 400 nm bis 460 nm, und besonders bevorzugt von 430 nm bis 460 nm, alternativ besonders bevorzugt von 400 nm bis 405 nm, auf. Zur Ermittlung der Peakwellenlänge wird eine strahlungsäquivalente Größe wie z.B. der Strahlungsfluss, spektral aufgelöst gemessen und in einem kartesischen Koordinatensystem dargestellt. Auf der y-Achse wird die strahlungsäquivalente Größe aufgetragen und auf der x-Achse die Wellenlängen. Das absolute Maximum dieser Kurve ist die "Peakwellenlänge" (Definition nach DIN 5031-1 (1982)). "Von...bis"... schließt hierbei die genannten Grenzwerte ein. Dabei hat das "LED-Licht" bevorzugt eine enge Emissionsbreite mit einer Halbwertsbreite von maximal 60 nm, weiter bevorzugt von maximal 45 nm, noch weiter bevorzugt von max. 30 nm, wobei monochromatisches Licht besonders bevorzugt ist. Hierbei ist die Halbwertsbreite die volle Breite eines Emissionspeaks bei des halber Höhe der Intensität.

Die Nutzung "als Lichtleiter" bedeutet, dass zumindest ein Teil des von der LED-Lichtquelle abgestrahlten Lichtes durch innere Reflexion durch die transparente Schicht a3 transportiert wird. Bevorzugt wird zumindest ein Teil des von der LED-Lichtquelle abgestrahlten Lichtes an den Grenzflächen der transparenten Schicht a3 mit der Steinschicht a2 und/oder der transparenten Schicht a3 mit der Umgebungsluft bzw. einer ggf. weiter außen liegenden zusätzlichen transparenten Schicht des Mehrschichtkörpers totalreflektiert. "Grenzfläche" ist hierbei die Fläche, an der und/oder durch die zwei oder mehr Schichten des Mehrschichtkörpers oder die Umgebungsluft aneinander angebunden sind, bzw. unmittelbar aneinander grenzen. Grenzflächen werden durch Materialübergänge gebildet.

Edge Lighting, also die Kantenbeleuchtung, ist eine vergleichsweise energieeffiziente Möglichkeit, ansprechende Beleuchtungseffekte zu generieren, da verhältnismäßig wenige LEDs benötigt werden.

Es versteht sich, dass neben der LED-Lichtquelle, welche die transparente Schicht a3 als Lichtleiter nutzt, d.h. für sogenannte "edge lighting"-Anwendungen, zusätzlich auch Licht von der Rückseite des Mehrschichtkörpers, also von der Seite der Trägerschicht aus, in den Mehrschichtkörper eingestrahlt werden kann, so dass eine klassische Hinterleuchtung stattfindet. Bei der Hinterleuchtung befindet sich die LED-Lichtquelle hinter der Trägerschicht, so dass Trägerschicht, Steinschicht und transparente Schicht durchleuchtet werden.

Dass die transparente Schicht a3 als Lichtleiter für von der LED-Lichtquelle abgestrahltes Licht nutzbar ist bedeutet nicht, dass im Betriebszustand jeden Tag ununterbrochen die Kantenbeleuchtung auch erfolgen muss. Vielmehr handelt es sich dabei um eine technisch vorgegebene, vom Benutzer wählbare Option. Selbstverständlich kann die Kantenbeleuchtung auch ausgeschaltet sein, wie es insbesondere bei Tageslicht in der Regel der Fall sein wird. Es versteht sich, dass auch unter Einsatz von Sensortechnik oder Zeitschalttechnik eine entsprechende Steuerung der Lichtquelle erfolgen kann. Sofern eine zusätzliche Hinterleuchtung vorgesehen ist, kann diese alternativ zu der Kantenbeleuchtung auswählbar oder gleichzeitig mit ihr einschaltbar sein. Ebenso kann die LED-Beleuchtungseinheit auch genutzt werden, wenn sowohl Hinterleuchtung als auch Kantenbeleuchtung ausgeschaltet sind.

Bei der Trägerschicht a1 handelt es sich um eine Schicht aus einer thermoplastischen Zusammensetzung. "Aus" bedeutet, dass die Trägerschicht aus der Zusammensetzung besteht. Die thermoplastische Zusammensetzung basiert auf einem thermoplastischen Polymer, welches bevorzugt in einem Anteil von mindestens 50 Gew.-%, weiter bevorzugt mindestens 60 Gew.-%, noch weiter bevorzugt mindestens 75 Gew.-%, besonders bevorzugt mindestens 85 Gew.-%, ganz besonders bevorzugt mindestens 90 Gew.-%, in der thermoplastischen Zusammensetzung enthalten ist.

Grundsätzlich kann die Trägerschicht transparent, transluzent oder opak sein, wobei für "transparent" die zuvor beschriebene Definition gilt. Unter "transluzent" im Sinne der vorliegenden Erfindung werden Formmassen verstanden, welche eine Transmission Ty, gemessen bei einer Dicke von 2 mm gemäß ISO 13468-2:2006 (D65, 10°), von < 40 % und mindestens 2,5 %, bevorzugt > 2,5 %, weiter bevorzugt < 25 % und > 2,7 %, besonders bevorzugt < 20 % und > 2,9 %, und bevorzugt eine Trübung, bestimmt nach ASTM D1003:2013 bei einer Schichtdicke von 2 mm, von > 95 %, besonders bevorzugt > 99 % aufweisen. "Opak" im Sinne der vorliegenden Erfindung sind solche Zusammensetzungen, die eine Lichttransmission Ty von weniger als 2,5 %, bevorzugt weniger als 1,0 %, bestimmt bei einer Schichtdicke von 2 mm nach DIN ISO 13468-2:2006 (D65, 10°), aufweisen.

Die Zusammensetzung der Trägerschicht kann insbesondere schwarz gefärbt sein. Gemäß der vorliegenden Erfindung werden unter schwarzen Zusammensetzungen solche Zusammensetzungen verstanden, die durch die CIELab-Farbkoordinaten L* kleiner als 40, a* kleiner als 15 und größer als -15, bevorzugt kleiner als 10 und größer als -10, und b* kleiner als 15 und größer als -15, bevorzugt kleiner als 10 und größer als -10, bestimmt bei einer Dicke von 2 mm gemäß ISO 13468-2:2006 (D65, 10°), beschrieben werden.

Geeignete thermoplastische Polymere sind beispielsweise aromatisches Polycarbonat (PC), Polyestercarbonat, Polystyrol (PS), Styrol-Copolymere, ein Polyalkylen wie Polyethylen (PE) oder Polypropylen (PP), ein aromatischer Polyester wie Polyethylenterephthalat (PET) oder Polybutylenterephthalat (PBT), PET-Cyclohexandimethanol-Copolymer (PETG), Polyethylennaphthalat (PEN), ein Poly- oder Copolymethylmethacrylat wie Polymethylmethacrylat (PMMA), ein Polyimid (z.B. PMMI), ein Polyethersulfon, ein thermoplastisches Polyurethan, ein cyclisches Olefinpolymer oder -copolymer (COP bzw. COC) oder deren Mischungen, bevorzugt aromatisches Polycarbonat, aromatischer Polyester, cyclisches Olefinpolymer, einschließlich Olefincopolymer oder Polymethylmethacrylat oder deren Mischungen. Sofern eine Mischung verschiedener Polymere eingesetzt wird, handelt es sich bevorzugt um eine Mischung aus aromatischem Polycarbonat mit PMMA oder einem Polyester.

Besonders bevorzugt ist das Polymer, das in der thermoplastischen Zusammensetzung, aus welcher die Trägerschicht geformt ist, enthalten ist, aromatisches Polycarbonat, alleine oder in Mischung mit einem anderen Polymer, insbesondere einem Polyester.

Besonders bevorzugt enthält die thermoplastische Zusammensetzung der Trägerschicht nur aromatisches Polycarbonat als thermoplastisches Polymer. Aromatische Polycarbonate im erfindungsgemäßen Sinne sind alle bekannten aromatischen Polycarbonate. Dies schließt Homopolycarbonate und Copolycarbonate ein. Sofern im Rahmen der vorliegenden Erfindung nur von "Polycarbonat" an irgendeiner Stelle gesprochen wird, sind insbesondere aromatische Polycarbonate gemeint. Bei dem aromatischen Polycarbonat in einer thermoplastischen Zusammensetzung in einer der Schichten des Mehrschichtkörpers handelt es sich um ein bestimmtes aromatisches Polycarbonat oder um eine Mischung verschiedener aromatischer Polycarbonate, also z.B. zwei verschiedene aromatische Copolycarbonate oder zwei verschiedene aromatische Homopolycarbonate oder ein aromatisches Homopolycarbonat und ein aromatisches Copolycarbonat.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung ebenfalls unter dem Oberbegriff der thermoplastischen, aromatischen Polycarbonate subsumiert.

Die Herstellung der Polycarbonate erfolgt in bekannter Weise aus Dihydroxyarylverbindungen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-phenylethan, 1,3-Bis-[2-(4-hydroxyphenyl)-2-propyl]benzol (Bisphenol M), 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC) sowie die Bisphenole der Formeln (I) bis (III) 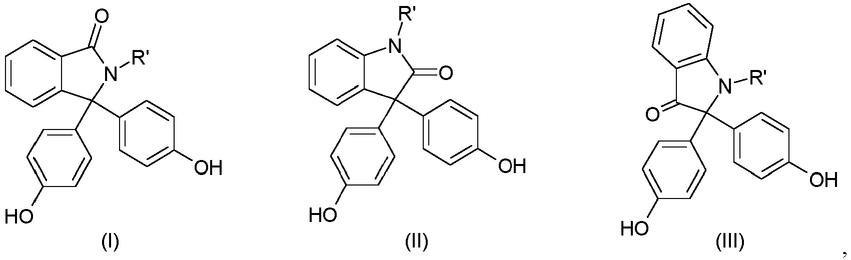 in denen R' jeweils für einen C₁- bis C₄-Alkylrest, Aralkylrest oder Arylrest, bevorzugt für einen Methylrest oder Phenylrest, ganz besonders bevorzugt für einen Methylrest, steht.

Besonders bevorzugte Dihydroxyarylverbindungen sind 4,4'-Dihydroxydiphenyl, 1,1-Bis-(4-hydroxyphenyl)-phenyl-ethan, 2,2-Bis-(4-hydroxyphenyl)-propan, 2,2-Bis-(3,5-dibrom-4-hydroxyphenyl)-propan, 2,2-Bis-(3,5-dichlor-4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC) sowie die Dihydroxyarylverbindungen der Formeln (I), (II) und/oder (III).

Diese und weitere geeignete Dihydroxyarylverbindungen sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff." sowie in "D.G. Legrand, J.T. Bendler, Handbook of Polycarbonate Science and Technology, Marcel Dekker New York 2000, S. 72ff." beschrieben.

Im Fall der Homopolycarbonate ist nur eine Dihydroxyarylverbindung eingesetzt, im Fall der Copolycarbonate sind mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind beispielsweise Phenol selbst, Alkylphenole wie Kresole, p-tert.-Butylphenol, Cumylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Trijodphenol, p-Jodphenol, sowie deren Mischungen.

Bevorzugte Kettenabbrecher sind ferner die Phenole, welche ein- oder mehrfach mit C₁- bis C₃₀-Alkylresten, linear oder verzweigt, bevorzugt unsubstituiert oder mit tert.-Butyl substituiert sind. Besonders bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Die Menge an einzusetzendem Kettenabbrecher beträgt bevorzugt 0,1 bis 5 Mol%, bezogen auf Mole an jeweils eingesetzten Dihydroxyarylverbindungen. Die Zugabe der Kettenabbrecher kann vor, während oder nach der Umsetzung mit einem Kohlesäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol%, bezogen wiederum auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt. Die in den erfindungsgemäßen Zusammensetzungen enthaltenen aromatischen Polycarbonate sind bevorzugt nach dem Grenzflächenverfahren hergestellt.

Bevorzugt werden lineare Polycarbonate eingesetzt.

Die aromatischen Polycarbonate der vorliegenden Erfindung besitzen bevorzugt gewichtsmittlere Molekulargewichte M_{w} zwischen 15.000 und 25.000 g/mol, vorzugsweise zwischen 15.000-24.000 g/mol, weiter bevorzugt zwischen 16.000 - 23.500 g/mol, besonders bevorzugt zwischen 18.000 - 22.500 g/mol. Die Werte gelten für die Ermittlung durch Gelpermeationschromatographie, unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist auch beim Kalibrieren Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors.

Der MVR-Wert des aromatischen Polycarbonats, gemessen nach ISO 1133:2012-03 bei 300°C und 1,2 kg, beträgt bevorzugt 14 bis 70 cm³/(10 min), weiter bevorzugt 18 bis 65 cm³/(10 min).

Die M_{W}- und MVR-Angaben beziehen sich auf die in der Zusammensetzung enthaltenen aromatischen Polycarbonate in ihrer Gesamtheit.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Es versteht sich, dass die thermoplastische Zusammensetzung weitere Komponenten enthalten kann. Grundsätzlich können dieses unterschiedlichste Komponente sein, wie sie in thermoplastischen Zusammensetzungen enthalten sind. Grundsätzlich kommt jede thermoplastische Zusammensetzung in Betracht, solange die Viskosität der Formmasse nicht so stark erhöht ist, dass eine ausreichende Benetzung der Steinoberfläche sowie eine ausreichende Durchdringung der Spalten und Poren im Stein behindert wird.

Bei einer thermoplastischen Zusammensetzung, die auf aromatischem Polycarbonat basiert, sind üblicherweise 0 bis 5 Gew.-%, bevorzugt 0,05 Gew.-% bis 3 Gew.-%, weiter bevorzugt 0,1 Gew.-% bis 1 Gew.-% Additive enthalten. Hier wie auch an anderen Stellen, soweit nicht anders angegeben, beziehen sich die Gew.-%-Angaben auf die jeweilige Gesamtzusammensetzung.

Übliche Polymeradditive, wie sie in der Zusammensetzung enthalten sein können, sind z.B. in EP-A 0 839 623, WO-A 96/15102, EP-A 0 500 496 oder "Plastics Additives Handbook", Hans Zweifel, 5th Edition 2000, Hanser Verlag, München beschrieben. Solche weiteren Additive sind beispielsweise Entformungsmittel, Antistatika, Füllstoffe, Antioxidantien, Flammschutzmittel, Antitropfmittel, Thermostabilisatoren, Fließverbesserer, optische Aufheller, Farbmittel, insbesondere Pigmente wie Weißpigmente, Lichtstreumittel, UV-Absorber und/oder IR-Absorber.

Bevorzugt sind als weitere Additive in der Zusammensetzung der Trägerschicht nur ein oder mehrere Entformer, UV-Absorber, Farbmittel (auch Ruß), Streupartikel und/oder ein oder mehrere Thermostabilisatoren enthalten.

Geeignete Thermostabilisatoren sind ausgewählt aus den Gruppen der Phosphate, Phosphite, Phosphonite und Phosphine. Beispiele sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit (Irgafos^{®} 168), Diisodecylpentaerythritoldiphosphit, Bis(2,4-di-tert-butylphenyl)pentaerythritoldiphosphit, Bis(2,6-di-tert-butyl-4-methylphenyl)pentaerythritol-diphosphit, Bis(2,4-di- cumylphenyl)-pentaerythritoldiphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)-penta-erythritoldiphosphit, Bis(2,4,6-tris(tert-butylphenyl)pentaerythritoldiphosphit, Tristearylsorbitoltriphosphit, Tetrakis(2,4-di-tert-butylphenyl)-4,4'-biphenylendiphosphonit, 6-Isooctyloxy-2,4,8, 10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1, 1'-biphenyl-2,2'-diyl)phosphit, Bis(2,6-di-tert-butyl-4-methylphenyl)pentaerythritoldiphosphite (PEP-36 ), 5-Butyl-5-ethyl-2-(2,4,6-tri-tert-butylphenoxy)-1,3,2-dioxaphosphiran, Triphenylphosphin (TPP), Trialkylphenylphosphin, Bisdiphenylphosphinoethan oder ein Trinaphthylphosphin. Insbesondere bevorzugt werden Triphenylphosphin (TPP), Irgafos^{®} 168 (Tris(2,4-di-tert-butyl-phenyl)-phosphit), PEP-36 (Bis(2,6-di-tert-butyl-4-methylphenyl)pentaerythritoldiphosphite) und Tris(nonylphenyl)phosphit oder deren Mischungen eingesetzt.

Phosphatstabilisatoren sind beispielsweise Phosphate der Formel (IV) oder Mischungen dieser Phosphate. 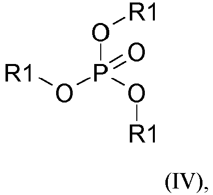 wobei R1 unabhängig voneinander für verzweigte Alkylreste und/oder optional substituierte Arylreste stehen, wobei der Alkylrest vorzugsweise ein C₁- bis C₁₈-Alkyl, weiter bevorzugt ein C₁- bis C₈-Alkylrest ist. Sofern ein Phosphatstabilisator enthalten ist, ist dieser besonders bevorzugt Tri-(2-ethylhexyl)-phosphat (Triisooctylphosphat).

Der Arylrest ist vorzugsweise mit C₁- bis C₈-Alkyl, verzweigtem C₁- bis C₈-Alkyl, oder Cumyl substituiert, wobei die Substituenten gleich oder verschieden sein können, gleiche Substituenten jedoch bevorzugt sind. Bevorzugt sind die Arylreste in den Positionen 2 und 4 oder 2, 4 und 6 substituiert. Ganz besonders bevorzugt sind tert-Butyl-Substituenten in diesen Positionen.

Weiter bevorzugt sind alle R1 gleich.

Ferner können Antioxidantien wie phenolische Antioxidantien, beispielsweise alkylierte Monophenole, alkylierte Thioalkylphenole, Hydrochinone und alkylierte Hydrochinone eingesetzt werden. Vorzugsweise werden Irganox^{®} 1010 (Pentaerythrit-3-(4-hydroxy-3,5-di-tert-butylphenyl)propionat; CAS: 6683-19-8) und/oder Irganox 1076^{®} (2,6-Di-tert-butyl-4-(octadecanoxycarbonylethyl)phenol) eingesetzt. Besonders bevorzugt wird Irganox 1076^{®} (2,6-Di-tert-butyl-4-(octadecanoxycarbonylethyl)phenol) eingesetzt.

In einer speziellen Ausführungsform werden die erfindungsgemäßen Phosphinverbindungen gemeinsam mit einem Phosphit oder einem phenolischen Antioxidans oder einer Mischung aus den beiden letztgenannten Verbindungen eingesetzt.

In einer bevorzugten Ausführungsform besteht das Stabilisatorsystem aus Triphenylphosphin, einem Gemisch von Triphenylphosphin und einem phenolischem Antioxidans wie Irganox^{®} 1076 oder Irganox^{®} 1010 und/oder einer Kombination von phenolischem Antioxidans und Phosphit, bevorzugt aus einem Gemisch aus Irganox^{®} 1076 bzw. Irganox^{®} 1010 und Irgafos^{®} 168 bzw. PEP-36.

In einer weiteren bevorzugten Ausführungsform besteht das Stabilisatorsystem aus einem Phosphin, einem Phosphit und einem phenolischen Antioxidans, bespielsweise Triphenylphosphin, Irganox^{®} 1076 und Irgafos^{®} 168.

Geeignete Entformungsmittel sind beispielsweise die Ester oder Teilester von ein- bis sechswertigen Alkoholen, insbesondere des Glycerins, des Pentaerythrits oder von Guerbet-Alkoholen. Einwertige Alkohole sind beispielsweise Stearylalkohol, Palmitylalkohol und Guerbet-Alkohole. Ein zweiwertiger Alkohol ist beispielsweise Glycol; ein dreiwertiger Alkohol ist beispielsweise Glycerin; vierwertige Alkohole sind beispielsweise Pentaerythrit und Mesoerythrit; fünfwertige Alkohole sind beispielsweise Arabit, Ribit und Xylit; sechswertige Alkohole sind beispielsweise Mannit, Glucit (Sorbit) und Dulcit.

Die Ester sind bevorzugt die Monoester, Diester, Triester, Tetraester, Pentaester und Hexaester oder deren Mischungen, insbesondere statistische Mischungen, aus gesättigten, aliphatischen C₁₀- bis C₃₆-Monocarbonsäuren und gegebenenfalls Hydroxymonocarbonsäuren, vorzugsweise mit gesättigten, aliphatischen C₁₄- bis C₃₂-Monocarbonsäuren und gegebenenfalls Hydroxymonocarbonsäuren.

Die kommerziell erhältlichen Fettsäureester, insbesondere des Pentaerythrits und des Glycerins, können herstellungsbedingt < 60% unterschiedlicher Teilester enthalten.

Gesättigte, aliphatische Monocarbonsäuren mit 10 bis 36 C-Atomen sind beispielsweise Caprinsäure, Laurinsäure, Myristinsäure, Palmitinsäure, Stearinsäure, Hydroxystearinsäure, Arachinsäure, Behensäure, Lignocerinsäure, Cerotinsäure und Montansäuren. Besonders geeignete Entformungsmittel als Komponente f) der erfindungsgemäßen Zusammensetzung sind z.B. Pentaerythritoltetrastearat (PETS) oder Glycerinmonostearat (GMS). Gemäß einer speziellen Ausführungsform der Erfindung enthält die Gesamtzusammensetzung Entformungsmittel in einem Anteil von 0 ppm bis 3000 ppm, bevorzugt 100 ppm bis 1000 ppm, und weiter bevorzugt 150 ppm bis 500 ppm bezogen auf die Masse der Gesamtzusammensetzung.

Bevorzugte UV-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in den EP-A 0 839 623, WO-A 96/15102 und EP-A 0 500 496 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

Ganz besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, Ciba Spezialitätenchemie, Basel), 2-(2'-Hydroxy-5'-(tert.-octyl)-phenyl)-benzotriazol (Tinuvin^{®} 329, Ciba Spezialitätenchemie, Basel), 2-(2'-Hydroxy-3'-(2-butyl)-5'-(tert.butyl)-phenyl)-benzotriazol (Tinuvin^{®} 350, Ciba Spezialitätenchemie, Basel), Bis-(3-(2H-benztriazolyl)-2-hydroxy-5-tert.-octyl)methan, (Tinuvin^{®} 360, Ciba Spezialitätenchemie, Basel), (2-(4,6-diphenyl-1,3,5-triazin-2-yl)-5-(hexyloxy)-phenol (Tinuvin^{®} 1577, Ciba Spezialitätenchemie, Basel), sowie der Benzophenone 2,4-Dihydroxy-benzophenon (Chimasorb^{®} 22 , Ciba Spezialitätenchemie, Basel) und 2-Hydroxy-4-(octyloxy)-benzophenon (Chimassorb^{®} 81, Ciba, Basel), 2-Cyano-3,3-diphenyl-2-propensäure-2-ethylhexylester, 2,2-Bis[[(2-cyano-1-oxo-3,3-diphenyl-2-propenyl)oxy]-methyl]-1,3-propandiylester (- 9CI) (Uvinul^{®} 3030, BASF AG Ludwigshafen), 2-[2-Hydroxy-4-(2-ethylhexyl)oxy]phenyl-4,6-di(4-phenyl)phenyl-1,3,5-triazin (CGX UVA 006, Ciba Spezialitätenchemie, Basel) oder Tetraethyl-2,2'-(1,4-phenylen-dimethyliden)-bismalonat (Hostavin^{®} B-Cap, Clariant AG).

Äußerst bevorzugte UV-Absorber sind beispielsweise Tinuvin^{®} 360, Tinuvin^{®} 350, Tinuvin^{®} 329, Hostavin^{®} B-CAP, besonders bevorzugt TIN 329 und Hostavin^{®} B-Cap.

Es können auch Mischungen dieser Ultraviolett-Absorber eingesetzt werden.

Hinsichtlich der Menge des in der Zusammensetzung enthaltenen Ultraviolett-Absorbers liegen keine besonderen Beschränkungen vor. Gemäß einer speziellen Ausführungsform der Erfindung enthält die Zusammensetzung Ultraviolett-Absorber in einer Menge von 0 ppm bis 6000 ppm, bevorzugt 500 ppm bis 5000 ppm, und weiter bevorzugt 1000 ppm bis 2000 ppm, bezogen auf das Gewicht der Gesamtzusammensetzung.

Antitropfmittel sind bevorzugt Fluor-enthaltende Antitropfmittel, insbesondere Polytetrafluorethylen.

Sofern allerdings neben der Kantenbeleuchtung noch eine Hinterleuchtung des Mehrschichtkörpers vorgesehen ist, ist die Trägerschicht so zu gestalten, dass noch eine ausreichende Menge Licht durch sie hindurchgelangt. In diesem Fall wird man die Trägerschicht transparent oder zumindest transluzent wählen. Auch die Steinschicht ist dann in jedem Fall so dünn zu wählen, dass sie noch in gewünschtem Maße lichtdurchlässig ist.

Die Trägerschicht ist bevorzugt eingefärbt. Hierbei können für das jeweilige thermoplastische Material übliche Farbmittel sowie Pigmente, insbesondere Weißpigmente, eingesetzt werden. Im "Nacht-Design" wird der Farbeindruck des Mehrschichtkörpers dann insbesondere bei Verwendung von weißem LED-Licht durch die Farbe der eingefärbten Trägerschicht bestimmt. Ein farbiges Nachtdesign, etwa rot, lässt sich aber auch erzielen, indem man statt einer weiß - kaltweiß oder warmweiß- strahlenden LED-Lichtquelle farbiges LED-Licht, insbesondere solches von RGB-LED, verwendet.

Die Dicke der Trägerschicht kann nach der jeweiligen gewünschten Anwendung frei gewählt werden. Üblicherweise wird die Dicke der Trägerschicht so gewählt sein, dass die Trägerschicht dem Mehrschichtkörper eine ausreichende Stabilität verleiht, aber nicht mehr Material als nötig eingesetzt wird, da dieses nicht nur unnötige Kosten verursacht, sondern auch das Gewicht des Bauteils unnötig erhöht. Insbesondere bei Automobil-Interieur-Elementen kommt es aber darauf an, dass man für die funktionellen Bauteile ein möglichst geringes Gewicht erreicht. Bevorzugt liegt die Dicke daher im Bereich von 0,5 bis 6 mm, weiter bevorzugt im Bereich 1,0 bis 5 mm, noch weiter bevorzugt im Bereich von 1,5 bis 4 mm. Diese Dicke ist über die gesamte Fläche der Trägerschicht aus thermoplastischem Material gemittelt. Die Abweichung der Dicke an jedem einzelnen Punkt der Schicht von der über die gesamte Fläche gemittelten Dicke beträgt bevorzugt maximal ± 10%, weiter bevorzugt maximal ± 5%. Da die Steinschicht üblicherweise eine leicht unregelmäßig Oberfläche aufweist und das Material hier in die Zwischenräume läuft, gibt es an vielen Punkten eine unbedeutende, leichte Abweichung von dem gemittelten Wert.

Vorzugsweise deckt die Trägerschicht die Steinschicht vollflächig ab oder überragt diese an wenigstens einer Seitenkante.

Bei der Steinschicht a2 handelt es sich um eine Schicht aus einem metamorphen Gestein oder einem Sedimentgestein. Hier liegen mehrere relativ diskrete Schichten vor, welche sich von dem Natursteinmaterial als dünne Lagen abziehen lassen. Geeignete Steinmaterialien sind beispielsweise schiefrig ausgebildete Tonsteine bzw. Schieferton, Kalkstein, Sandstein, Schlammstein, Tonschiefer, Quarzit, Phyllit, Glimmerschiefer, Chloritschiefer, Gneis, Talkschiefer, Blau- bzw. Gluakophanschiefer, Buntschiefer, Prasinit, Epidot-Amphibolit, Amphibolit, Embrechit, Agmatit, Kalkschiefer, Mylonit, Argillit, Migmatit, Marmor, Serpentinit, Eklogit, Schist, Fruchtschiefer oder Granulit. Bevorzugt umfasst die Steinschicht Buntschiefer, Glimmschiefer, Kalkstein, Sandstein oder Marmor, weiter bevorzugt besteht sie aus einem dieser Gesteine. Grundsätzlich kann die Steinschicht aus verschiedenen Steinelementen zusammengesetzt sein und beispielsweise ein Mosaik aus einer oder mehreren Steintypen darstellen. Bevorzugt besteht die Steinschicht jedoch aus einem Steintyp und ist einstückig gearbeitet.

Die Dicke der Steinschicht beträgt ≤ 2 mm, bevorzugt ≤ 1 mm, weiter bevorzugt ≤ 0,5 mm, besonders bevorzugt ≤ 0,3 mm, wobei es sich um eine über die gesamte flächige Seite der Steinschicht gemittelte Dicke handelt. "Flächige Seite" ist die Seite der Gesteinsschicht, die bei dem Mehrschichtkörper zur Sichtseite hin orientiert ist, d.h. dazu bestimmt ist, das optische Erscheinungsbild des Mehrschichtkörpers zu prägen, sowie die dieser Seite gegenüberliegende Seite.

Alternativ hierzu ist es ebenso möglich, dass die Steinschicht eine über die gesamte Fläche der Steinschicht gemittelte Dicke von > 2 mm aufweist. Dies ist beispielsweise dann sinnvoll, wenn die Beleuchtungseinheit nicht mit einer Hintergrundbeleuchtung ausgerüstet sein soll, folglich also kein Licht durch die Steinschicht durchgestrahlt werden muss.

Die Steinschicht weist bevorzugt ein zusammenhängendes Korngefüge auf.

Es ist ferner bevorzugt, dass die Steinschicht zumindest an der der transparenten Schicht zugewandten Flachseite eine Topographie aufweist, deren maximale Rauheit Rz vorzugsweise wenigstens 0,1 µm beträgt, bevorzugt wenigstens 0,5 µm, weiter bevorzugt 0,5 bis 10.000 µm, besonders bevorzugt 1,0 bis 5.000 µm. Die maximale Rauheit Rz ist dabei durch die den absoluten vertikalen Abstand zwischen der maximalen Profilspitzenhöhe und der maximalen Profiltaltiefe definiert. Die Messtrecke beträgt hierbei vorzugsweise wenigstens 2 cm. Diese Werte der maximalen Rauheit Rz sind deshalb von Vorteil, weil bei seitlicher Anstrahlung über eine oder mehrere Seitenkanten diese Topographie optisch durch Schattenwurf, Lichtbrechung und dergleichen an der rauen Steinoberfläche optisch herausgestellt und der mit dem Auge wahrgenommene dreidimensionale Eindruck verstärkt wird.

Bei der transparenten Schicht a3 handelt es sich ebenfalls um eine Schicht aus einer thermoplastischen Zusammensetzung. Es gilt hier grundsätzlich das bereits zu der Trägerschicht ausgeführte, inklusive der als bevorzugt beschriebenen Ausführungsformen, mit der Einschränkung, dass die Komponenten der thermoplastischen Zusammensetzung so zu wählen sind, dass eine im Sinne der Erfindung transparente Zusammensetzung erhalten wird. Bevorzugt sind als weitere Additive in der Zusammensetzung der transparenten Schicht nur ein oder mehrere Entformer, UV-Absorber und/oder ein oder mehrere Thermostabilisatoren enthalten,

Die transparente Schicht muss eine Dicke aufweisen, die ausreichend, aber nicht zu dick ist, damit durch diese Schicht eine Kantenbeleuchtung des Mehrschichtkörpers erfolgen kann. Gleichzeitig besteht ein Interesse daran, die Dicke der transparenten Schicht a3 möglichst gering zu halten, um das Gewicht der LED-Beleuchtungseinheit nicht unnötig zu erhöhen. Die Dicke liegt daher im Bereich von 1 bis 6 mm, weiter bevorzugt im Bereich 2 bis 5 mm, noch weiter bevorzugt im Bereich von 2,5 bis 4 mm, wobei die Dicke über die gesamte Fläche der transparenten Schicht gemittelt ist. Die Abweichung der Dicke an jedem einzelnen Punkt der transparenten Schicht von der über die gesamte Fläche gemittelten Dicke beträgt bevorzugt maximal ± 10%.

Um eine ausreichende Fließfähigkeit der thermoplastischen Zusammensetzungen und damit eine ausreichend gute Verarbeitbarkeit zu gewährleisten, sollte der MVR-Wert der Zusammensetzungen (gemessen nach ISO 1133:2012-03 bei 300°C und 1,2 kg) bevorzugt zwischen 14 cm³/(10 min) und 80 cm³/(10 min), weiter bevorzugt zwischen 20 cm³/(10 min) und 80 cm³/(10 min), noch weiter bevorzugt zwischen 30 cm³/(10 min) und 80 cm³/(10 min) und besonders bevorzugt zwischen 32 cm³/(10 min) und 75 cm³/(10 min) liegen.

Für eine gute mechanische Stabilität sollte die Kerbschlagzähigkeit der thermoplastischen Zusammensetzungen, gemessen nach ISO 179/1eA:2010 bei Raumtemperatur an 3 mm dicken Probekörpern, bevorzugt mindestens 40 kJ/m² betragen, weiter bevorzugt zwischen 50 kJ/m² und 130 kJ/m², noch weiter bevorzugt zwischen 55 kJ/m² und 120 kJ/m² und besonders bevorzugt zwischen 55 kJ/m² und 80 kJ/m².

Die gemeinsame Dicke der Schichten Trägerschicht a1, Steinschicht a2 und transparente Schicht a3 des Mehrschichtkörpers der erfindungsgemäßen Beleuchtungseinheit beträgt bevorzugt 1,5 bis 12 mm, weiter bevorzugt 3 bis 10 mm, noch weiter bevorzugt 4 bis 8 mm.

Es ist bevorzugt, dass die transparente Schicht die Steinschicht weitestgehend vollflächig abdeckt, insbesondere zu wenigstens 90%.

Eine erfindungsgemäß bevorzugte LED-Beleuchtungseinheit umfasst
a) einen Mehrschichtkörper und
b) eine LED-Lichtquelle,
wobei der Mehrschichtkörper die folgende Schichten in dieser Reihenfolge umfasst:
a1) eine Trägerschicht aus einer thermoplastischen Zusammensetzung, wobei die thermoplastische Zusammensetzung auf aromatischem Polycarbonat basiert,
a2) eine Steinschicht,
a3) eine transparente Schicht aus einer thermoplastischen Zusammensetzung basierend auf aromatischem Polycarbonat mit einer über die gesamte Fläche gemittelten Dicke von 1 bis 6 mm, welche auf der Seite der Steinschicht a2 liegt, welche die Sichtseite des Mehrschichtkörpers in der LED-Beleuchtungseinheit darstellt,
   und
wobei die LED-Lichtquelle an mindestens einer Seitenkante der transparenten Schicht so angeordnet ist, dass die transparente Schicht als Lichtleiter für von der LED-Lichtquelle abgestrahltes Licht nutzbar ist.

Eine erfindungsgemäß weiter bevorzugte LED-Beleuchtungseinheit umfasst
a) einen Mehrschichtkörper und
b) eine LED-Lichtquelle,
wobei der Mehrschichtkörper die folgende Schichten in dieser Reihenfolge umfasst:
a1) eine Trägerschicht aus einer thermoplastischen Zusammensetzung, wobei die thermoplastische Zusammensetzung mindestens 50 Gew.-%, weiter bevorzugt mindestens 75 Gew.-%, noch weiter bevorzugt mindestens 90 Gew.-% aromatisches Polycarbonat enthält, mit einer über die gesamte Fläche der Trägerschicht gemittelten Dicke von 0,5 bis 6 mm,
a2) eine Steinschicht,
a3) eine transparente Schicht aus einer thermoplastischen Zusammensetzung, wobei die thermoplastische Zusammensetzung mindestens 50 Gew.-%, weiter bevorzugt mindestens 75 Gew.-%, noch weiter bevorzugt mindestens 90 Gew.-% aromatisches Polycarbonat enthält, mit einer über die gesamte Fläche gemittelten Dicke von 1 bis 6 mm, welche auf der Seite der Steinschicht a2 liegt, welche die Sichtseite des Mehrschichtkörpers in der LED-Beleuchtungseinheit darstellt,
   und
wobei die LED-Lichtquelle an mindestens einer Seitenkante der transparenten Schicht so angeordnet ist, dass die transparente Schicht als Lichtleiter für von der LED-Lichtquelle abgestrahltes Licht nutzbar ist.

Eine erfindungsgemäß noch weiter bevorzugte LED-Beleuchtungseinheit umfasst
a) einen Mehrschichtkörper und
b) eine LED-Lichtquelle,
wobei der Mehrschichtkörper die folgende Schichten in dieser Reihenfolge umfasst:
a1) eine Trägerschicht aus einer thermoplastischen Zusammensetzung, wobei die thermoplastische Zusammensetzung mindestens 50 Gew.-%, weiter bevorzugt mindestens 75 Gew.-%, noch weiter bevorzugt mindestens 90 Gew.-% aromatisches Polycarbonat enthält, mit einer über die gesamte Fläche der Trägerschicht gemittelten Dicke von 0,5 bis 6 mm,
a2) eine lichtdurchlässige Steinschicht, bevorzugt ausgewählt aus der Gruppe Buntschiefer, Glimmschiefer, Kalkstein, Sandstein und/oder Marmor, mit einer Dicke von ≤ 2 mm, bevorzugt ≤ 1 mm,
a3) eine transparente Schicht aus einer thermoplastischen Zusammensetzung, wobei die thermoplastische Zusammensetzung mindestens 50 Gew.-%, weiter bevorzugt mindestens 75 Gew.-%, noch weiter bevorzugt mindestens 90 Gew.-% aromatisches Polycarbonat enthält, mit einer über die gesamte Fläche gemittelten Dicke von 1 bis 6 mm, welche auf der Seite der Steinschicht a2 liegt, welche die Sichtseite des Mehrschichtkörpers in der LED-Beleuchtungseinheit darstellt,
   und
wobei die LED-Lichtquelle an mindestens einer Seitenkante der transparenten Schicht so angeordnet ist, dass die transparente Schicht als Lichtleiter für von der LED-Lichtquelle abgestrahltes Licht nutzbar ist.

Eine erfindungsgemäß besonders bevorzugte LED-Beleuchtungseinheit umfasst
a) einen Mehrschichtkörper und
b) eine erste LED-Lichtquelle, welche an mindestens einer Seitenkante der transparenten Schicht so angeordnet ist, dass die transparente Schicht als Lichtleiter für von der LED-Lichtquelle abgestrahltes Licht nutzbar ist,
c) eine zweite LED-Lichtquelle, welche so angeordnet ist, dass sie als Hinterleuchtung für den Mehrschichtkörper dient,
wobei der Mehrschichtkörper die folgende Schichten in dieser Reihenfolge umfasst:
a1) eine Trägerschicht aus einer transparenten oder transluzenten thermoplastischen Zusammensetzung, wobei die thermoplastische Zusammensetzung mindestens 50 Gew.-%, weiter bevorzugt mindestens 75 Gew.-%, noch weiter bevorzugt mindestens 90 Gew.-% aromatisches Polycarbonat enthält, mit einer über die gesamte Fläche der Trägerschicht gemittelten Dicke von 0,5 bis 6 mm,
a2) eine lichtdurchlässige Steinschicht, bevorzugt ausgewählt aus der Gruppe Buntschiefer, Glimmschiefer, Kalkstein, Sandstein und/oder Marmor, mit einer über die gesamte Fläche der Steinschicht gemittelten Dicke von ≤ 2 mm, bevorzugt ≤ 1 mm,
a3) eine transparente Schicht aus einer thermoplastischen Zusammensetzung, wobei die thermoplastische Zusammensetzung mindestens 50 Gew.-%, weiter bevorzugt mindestens 75 Gew.-%, noch weiter bevorzugt mindestens 90 Gew.-% aromatisches Polycarbonat enthält, mit einer über die gesamte Fläche gemittelten Dicke von 1 bis 6 mm, welche auf der Seite der Steinschicht a2 liegt, welche die Sichtseite des Mehrschichtkörpers in der LED-Beleuchtungseinheit darstellt.

Ganz besonders bevorzugt umfasst der Mehrschichtkörper keine weiteren Schichten außer den Schichten a1 bis a3 und ggf. vorhandene Schutzschichten, insbesondere transparente Kratzfestschichten.

Die Herstellung der Formmassen für die Schichten und schließlich der Schichten des Mehrschichtkörpers aus thermoplastischen Zusammensetzungen, ausgehend von den beschriebenen Komponenten, erfolgt mit gängigen Einarbeitungsverfahren durch Zusammenführung, Vermischen und Homogenisieren, wobei insbesondere die Homogenisierung, bevorzugt in der Schmelze unter Einwirkung von Scherkräften, stattfindet. Dazu werden das aromatische Polycarbonat und die ggf. weiteren Komponenten der Polycarbonat-Formmasse auf üblichen Schmelze-Mischaggregaten wie z.B. auf Ein- oder Mehrwellen-Extrudern oder auf Knetern in der Schmelze unter üblichen Bedingungen vermischt, extrudiert und granuliert. Die Additive können entweder separat als Granulate bzw. Pellets über Dosierwaagen oder Seitenfüttereinrichtungen oder auch bei erhöhter Temperatur als Schmelze mittels Dosierpumpen an geeigneter Stelle in den Feststoffförderbereich des Extruders oder in die Polymerschmelze dosiert werden. Die Masterbatches in Form von Granulaten oder Pellets können auch mit anderen partikelförmigen Verbindungen zu einer Vormischung vereinigt und dann gemeinsam über Dosiertrichter oder Seitenfüttereinrichtungen in den Feststoffförderbereich des Extruders oder in die Polymerschmelze im Extruder zugeführt werden. Bei dem Compoundier-Aggregat handelt es sich beispielsweise um einen Zweiwellenextruder, besonders bevorzugt um einen Zweiwellenextruder mit gleichsinnig rotierenden Wellen, wobei der Zweiwellenextruder ein Längen/Durchmesser-Verhältnis der Schneckenwelle bevorzugt von 20 bis 44, besonders bevorzugt von 28 bis 40 aufweist. Ein derartiger Zweiwellenextruder umfasst eine Aufschmelz- und Mischzone oder eine kombinierte Aufschmelz- und Mischzone und optional eine Entgasungszone, an der ein absoluter Druck p von bevorzugt höchstens 800 mbar, weiter bevorzugt höchstens 500 mbar, besonders bevorzugt höchstens 200 mbar eingestellt wird. Die mittlere Verweilzeit der Mischungszusammensetzung im Extruder ist bevorzugt auf maximal 120 s, besonders bevorzugt maximal 80 s, besonders bevorzugt auf max. 60 s begrenzt. Die Temperatur der Schmelze des Polymers beziehungsweise der Polymerlegierung am Austritt des Extruders beträgt in bevorzugter Ausführungsform 200°C bis 400°C.

Nach der Herstellung der Formmassen können diese durch Extrudieren, Heißpressen, Spritzprägen oder Spritzgießen in entsprechende Formteile überführt werden. Für die Herstellung der erfindungsgemäßen Formteile bevorzugt ist hierbei das Spritzgießen oder Spritzprägen, insbesondere das Spritzgießen. Dabei wird im ersten Schritt eine Steinplatte in ein Spritzgießwerkzeug eingelegt und mit einer Formmasse überspritzt. Nach der Entformung und einer weiteren Abkühlzeit wird die zu einem thermoplastischen Formteil erstarrte Formmasse von der Steinplatte abgezogen, wobei eine dünne Steinschicht auf dem Formteil verbleibt. Dieses Formteil mit der dünnen Steinschicht wird im zweiten Schritt erneut in ein Spritzgießwerkzeug eingelegt und die Seite mit der Steinschicht mit einer weiteren Formmasse überspritzt. Nach Ablauf der Kühlzeit wird der fertige Mehrschichtkörper entformt.

Spritzgießverfahren sind dem Fachmann bekannt und beispielsweise im "Handbuch Spritzgießen", Friedrich Johannnaber/Walter Michaeli, München; Wien: Hanser, 2001, ISBN 3-446-15632-1 oder in "Anleitung zum Bau von Spritzgießwerkzeugen", Menges/Michaeli/Mohren, München; Wien: Hanser, 1999, ISBN 3-446-21258-2 beschrieben.

Spritzguss umfasst hier alle Spritzgießverfahren einschließlich Mehrkomponentenspritzguss und Spritzprägen.

Spritzprägeverfahren unterscheiden sich von herkömmlichen Spritzgussverfahren dadurch, dass der Einspritz- und/oder Verfestigungsvorgang unter Ausführung einer Formplattenbewegung durchgeführt wird. Beim bekannten Spritzprägeverfahren sind die Formplatten vor dem Einspritzvorgang bereits etwas geöffnet, um die bei der späteren Verfestigung auftretende Schwindung auszugleichen und den benötigten Spritzdruck zu reduzieren. Schon zu Beginn des Einspritzvorganges ist daher eine vorvergrößerte Kavität vorhanden. Tauchkanten des Werkzeuges garantieren auch bei etwas geöffneten Formplatten noch eine ausreichende Dichtigkeit der vorvergrößerten Kavität. Die Kunststoffmasse wird in diese vorvergrößerte Kavität eingespritzt und währenddessen bzw. anschließend unter Ausführung einer Werkzeugbewegung in Schließrichtung verpresst. Insbesondere bei der Herstellung von großflächigen und dünnwandigen Formteilen mit langen Fließwegen ist die aufwändigere Spritzprägetechnik bevorzugt oder ggf. zwingend erforderlich. Nur auf diese Weise wird eine Reduzierung der bei großen Formteilen benötigten Spritzdrücke erreicht. Ferner können Spannungen bzw. Verzug im Spritzgießteil, welche infolge hoher Spritzdrücke auftreten, durch Spritzprägen vermieden werden.

Die Mehrschichtkörper können sowohl als Platten geformt sein, als auch eine dreidimensional geformte Oberfläche aufweisen, d.h. eine von einer Platte abweichende Gestalt, wobei unter Platte ein Körper verstanden wird, bei dem für die drei Paare gegenüberliegender Seiten der Schichten a1, a2 und a3 - untereinander und alle zusammengilt, dass diese planparallel oder zumindest annähernd planparallel zueinander sind.

Wie zuvor beschrieben, können die Mehrschichtkörper auf einer oder beiden der äußeren flächigen Seiten einen Kratzfestlack als Teil einer Schutzschicht bzw. als Schutzschicht aufweisen. Dieser ist bevorzugt ein Polysiloxanlack, hergestellt nach dem Sol-Gel-Prozess. Die Schutzschicht enthält besonders bevorzugt außerdem mindestens einen UV-Absorber. Die Schutzschicht weist eine hohe Abrieb- und Kratzfestbeständigkeit auf und erfüllt damit insbesondere die Funktion einer Kratzfestbeschichtung.

Kommerziell erhältliche Systeme sind z.B. AS4000, SHC5020 und AS4700 von Momentive Performance Materials. Derartige Systeme sind z.B. in US 5,041,313 A, DE 3,1213,85 A1, US 5,391,795 A und WO 2008/109072 A1 beschrieben. Die Synthese dieser Materialien erfolgt üblicherweise über Kondensation von Alkoxy- und/oder Alkylalkoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Es sind verschiedene Methoden bekannt, um eine Kratzfestbeschichtung auf Kunststoffartikel aufzubringen. Die Kratzfestbeschichtungen können beispielsweise über Tauchverfahren, Spincoating, Sprühverfahren oder eine Fließbeschichtung, bevorzugt über Tauch- oder Fließverfahren, aufgebracht werden. Die Aushärtung kann thermisch oder mittels UV-Bestrahlung erfolgen. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasma-gestützte Polymerisationsverfahren aufgebracht werden, z.B. über ein SiO₂-Plasma. Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen. In der Kratzfestschicht können verschiedene Additive, wie z.B. UV-Absorber, abgeleitet z.B. von Triazolen oder Triazinen, vorhanden sein.

Die Schutzschicht kann ein Ein- oder Mehrschichtsystem sein und somit auch eine Kombination zweier oder mehrerer Schichten. Insbesondere kann die Schutzschicht aus den Schichten Decklackschicht a' und Primer-Schicht a" bestehen, wobei die Primerschicht zwischen der Decklackschicht und der zu schützenden Schicht angeordnet ist.

Kratzfestbeschichtungen auf Polysiloxanbasis werden bevorzugt über Tauch- oder Fließverfahren aufgebracht. Die Aushärtung erfolgt bei Temperaturen von 50 °C - 140 °C.

Es wird bevorzugt ein UV-Absorber enthaltender Primer eingesetzt, um die Haftung des Kratzfestlackes auf dem zu beschichtenden Substrat zu verbessern. Der Primer kann weitere Stabilisatoren wie z.B. HALS-Systeme (Stabilisatoren auf Basis sterisch gehinderter Amine), Haftvermittler und/oder Fließhilfsmittel enthalten. Das jeweilige Harz, welches das Basismaterial der Primerschicht bildet, kann aus einer Vielzahl von Materialien ausgewählt werden und ist beispielsweise in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melamin-basierte, Epoxy- und Alkyd-Systeme oder Mischungen dieser Systeme eingesetzt werden. Das Harz wird meistens in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50 °C und 140 °C eingesetzt - häufig, nachdem ein Großteil des Lösemittels kurzzeitig bei Raumtemperatur entfernt wurde. Kommerziell erhältliche Primer-Systeme sind z.B. SHP470, SHP470-FT2050 und SHP401 der Firma Momentive Performance Materials. Derartige Beschichtungen sind z.B. in US 6,350,512 B1, US 5,869,185 A, EP 1308084 A1 und WO 2006/108520 A1 beschrieben.

In einer bevorzugten Ausführungsform, die eine besonders gute Bewitterungsstabilität bewirkt, umfasst die Schutzschicht eine
Kratzfestbeschichtung auf Polysiloxanbasis, enthaltend
i. mindestens einen UV-Absorber aus der Gruppe der Benzophenone, Resorcine, 2-(2-Hydroxyphenyl-)Bentriazole, Hydroxyphenyl-s-Triazine, 2-Cyanacrylate, Oxalanilide
   und/oder einen UV-Inhibitor aus der Gruppe der sterisch gehinderten Amine (HALS), insbesondere basierend auf 2,2,6,6-Tetramethylpiperidin oder dessen Derivaten;
ii. mindestens eine Kombination von einem organo-modifizierten Silan mit einem Kiesel-Sol. Das organo-modifizierte Silan ist beispielsweise ein Methyltrialkoxy- oder Dimethyldialkoxysilan;
und optional, in einer weiter bevorzugten Ausführungsform, zusätzlich eine auf dem zu beschichtenden Substrat angeordnete, als Haftvermittler zwischen der Kratzfestbeschichtung auf Polysiloxanbasis und dem zu beschichtenden Substrat wirkende Primerschicht (Schicht a"), enthaltend mindestens einen UV-Absorber aus der Gruppe der Benzophenone, der Resorcine, 2-(2-Hydroxyphenyl-)Bentriazole, Hydroxyphenyl-s-Triazine, 2-Cyanacrylate, Oxalanilide und/oder sterisch gehinderten Amine (HALS), insbesondere basierend auf 2,2,6,6-Tetramethylpiperidin sowie dessen Derivaten, wobei die Dicke der Primerschicht 0,3 µm bis 8 µm, bevorzugt 1,1 µm bis 4,0 µm, beträgt.

Ganz besonders bevorzugt umfasst die Schutzschicht keine weiteren Schichten.

Unter "Derivaten" werden erfindungsgemäß solche Verbindungen verstanden, deren Molekülstruktur an der Stelle eines H-Atoms oder einer funktionellen Gruppe ein anderes Atom oder eine andere Atomgruppe besitzt bzw. bei denen ein oder mehrere Atome/Atomgruppen entfernt wurden. Die Stammverbindung ist somit noch weiterhin erkennbar.

Die Polysiloxanschicht enthält bevorzugt siliciumorganische Verbindungen der Formel RₙSiX₄₋ₙ, und/oder partielle Kondensate derselben, wobei die Reste R gleich oder verschieden sind und für einen linearen oder verzweigten, gesättigten oder ein- oder mehrfach ungesättigten oder aromatischen Kohlenwasserstoffrest stehen, die Reste X gleich oder verschieden sind und für hydrolysierbare Gruppen oder Hydroxylgruppen stehen, bevorzugt für Halogen, insbesondere Chlor oder Brom, Alkoxygruppen, Alkylcarbonylgruppen oder Acyloxygruppen stehen und n 0,1,2 oder 3, bevorzugt 1 oder 2, ganz besonders bevorzugt 1, ist. R steht bevorzugt für gesättigte, verzweigte oder unverzweigte Alkylreste mit 1 bis 20 Kohlenstoffatomen und/oder für ein- oder mehrfach ungesättigte verzweigte oder unverzweigte Alkenylreste mit 2 bis 20 Kohlenstoffatomen oder aromatische Gruppen mit 6 bis 12 Kohlenstoffatomen. Weiter bevorzugt weisen die Alkyl- bzw. Alkenylreste bis zu 12, noch weiter bevorzugt bis zu 8 Kohlenstoffatome auf. Besonders bevorzugt sind alle Reste Methyl und/oder Phenyl. Besonders bevorzugt steht X für eine Alkoxygruppe, ganz besonders bevorzugt für eine C₁- bis C₄-Alkoxygruppe, beispielsweise für eine Methoxy- oder eine Ethoxygruppe.

Die Silicium-Verbindungen RₙSiX₄₋ₙ sind über die Reste X hydrolysierbar und kondensierbar. Über diese hydrolytisch kondensierbaren Gruppen wird ein anorganisches Netzwerk mit Si-O-Si-Einheiten aufgebaut. Die Reste R sind unter den üblichen Kondensationsbedingungen im Gegensatz zu den Resten X gegenüber einer Hydrolyse stabil.

Bei Verwendung der vorgenannten Siloxansysteme sind Trockenschichtdicken von 3 µm - 20 µm bevorzugt, weiter bevorzugt 5 µm - 15 µm, besonders bevorzugt 6 µm - 12 µm. Mit Trockenschichtdicke ist hier die Schichtdicke des Lackes nach Applikation und anschließendem Verdampfen des Lösemittels und anschließender thermischer oder UV-Härtung gemeint.

Es können anstelle von Primer/Kratzfestbeschichtungs-Kombinationen auch Einkomponenten-Hybrid-Systeme, entweder thermisch- oder UV-härtend, für die erfindungsgemäßen Mehrschichtkörper eingesetzt werden.

Diese sind z.B. in EP 0570165 A2 oder WO 2008/071363 A2 oder DE 2804283 A beschrieben. Kommerziell erhältliche Hybrid-Systeme sind z.B. unter den Namen PHC 587, PHC 587C als thermisch härtende oder UVHC 3000 und UVHC 5000 als UV-härtende Lacke der Firma Momentive Performance Materials erhältlich. Weiter erfindungsgemäß geeignete, kommerziell erhältliche UV-härtende Lacksysteme sind UVT 610 und UVT 820 der Firma Redspot.

In einem besonders bevorzugten Verfahren zur Herstellung der erfindungsgemäßen Formteile erfolgt die Applikation der Schutzschicht über das Flutverfahren, da es zu beschichteten Teilen mit hoher optischer Qualität führt.

Das Flutverfahren kann manuell mit Schlauch oder geeignetem Beschichtungskopf oder automatisch im Durchlauf über Flutlackierroboter- und gegebenenfalls Schlitzdüsen erfolgen.

Weitere mögliche Applikationsverfahren sind Tauchen, Rakeln, Walzen, Sprühen oder Spincoating. Hierbei können die Bauteile, sowohl hängend als auch in einem entsprechenden Warenträger gelagert, beschichtet werden.

Bei größeren und/oder 3D-Bauteilen - d.h. Bauteilen mit dreidimensionaler Oberfläche, die also eine von einer Platte abweichende Geometrie aufweisen- wird das zu beschichtende Teil in einen geeigneten Warenträger eingehängt oder aufgesetzt.

Bei Kleinteilen kann die Beschichtung auch per Hand durchgeführt werden. Hierbei wird die zu schichtende flüssige Primer- oder Lacklösung zur Ausbildung der Schutzschicht ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Die lackierten Platten werden senkrecht an einer Klammer hängend nach den jeweiligen Herstellervorgaben abgelüftet und gehärtet.

### Beispiele

Die Erfindung wird anhand der nachfolgenden Beispiele näher erläutert, ohne jedoch darauf beschränkt zu sein.

### Eingesetzte Materialien

Transparentes Makrolon^{®} Ai der Covestro Deutschland AG: aromatisches Polycarbonat auf Basis von Bisphenol A mit einer MVR von 19 cm³/(10 min), bestimmt bei 300 °C und 1,2 kg gemäß DIN ISO 1133:2012-03, enthaltend UV-Absorber und Entformer. Ty, gemessen bei einer Dicke von 2 mm gemäß ISO 13468-2:2006 (D65, 10°): 88,07 %. Trübung, bestimmt nach ASTM D1003:2013 bei einer Schichtdicke von 2 mm: 0,68 %.

Transluzent-schwarz eingefärbtes Makrolon^{®} Ai der Covestro Deutschland AG: aromatisches Polycarbonat auf Basis von Bisphenol A mit einer MVR von 19 cm³/(10 min), bestimmt bei 300 °C und 1,2 kg gemäß DIN ISO 1133:2012-03, enthaltend UV-Absorber und Entformer. Ty, gemessen bei einer Dicke von 2 mm gemäß ISO 13468-2:2006 (D65, 10°): 3,84 %. Trübung, bestimmt nach ASTM D1003:2013 bei einer Schichtdicke von 2 mm: 100 %.

Zur Vorbehandlung wurden die Polycarbonate für 4 Stunden bei 120 °C in Trockenluft getrocknet.

Steinplatten Buntschiefer, Steinplatten Glimmerschiefer und Steinplatten Sandstein mit einer Dicke von jeweils etwa 3 mm, die auf die Maße 200 mm x 150 mm zugeschnitten wurden.

### Herstellung der Formkörper

Auf einer KM GX400 Spritzgießmaschine der KraussMaffei Group GmbH wurde zu jeder der Steinplatten ein mehrschichtiges Formteil mit den Maßen 200 mm x 150 mm x 6 mm hergestellt.

Dazu wurde in einem ersten Schritt jeweils eine Steinplatte, die vorab bei 115 °C für 15 Minuten in einem Wärmeschrank vortemperiert worden war, in die erste Werkzeughälfte eines Stahlwerkzeugs mit den Forminnenmaßen 200 mm x 150 mm x 6 mm eingelegt. Nach dem Schließen des Werkzeugs wurde das bei 305 °C aufgeschmolzene transparente Polycarbonat-Material mit einem maximalen spezifischen Einspritzdruck von ca. 2000 bar in das Werkzeug auf die Steinoberfläche eingespritzt. Die Temperatur der Werkzeugwand lag auf der Auswerferseite bei 100 °C, auf der gegenüberliegenden Einspritzseite bei 90 °C. Die Einspritzzeit betrug 2,5 Sekunden. Nach einer Nachdruckzeit von 15 Sekunden (spezifischer Nachdruck: 850 bar) und einer Kühlzeit von 35 Sekunden wurde das Werkzeug geöffnet und das Formteil entnommen.

Nach etwa 5 Minuten Abkühlen dieses Formteils bei Raumtemperatur wurde die auf die Steinoberfläche aufgespritzte Polycarbonatplatte von der Steinplatte abgezogen. Dabei verblieb eine sehr dünne Steinschicht fest auf der Polycarbonatplatte, welche eine über die gesamte Fläche gemittelte Dicke von < 2 mm aufwies.

Diese Polycarbonatplatte mit der dünnen Steinschicht, welche zusammen im Mittel eine Dicke von etwas mehr als 3 mm aufwies, wurde erneut bei 115 °C für 15 Minuten in einem Wärmeschrank vortemperiert. Parallel wurde das Polycarbonat-Material im Einspritzzylinder von transparent auf transluzent schwarz gewechselt. Anschließend wurde diese Platte wieder in die erste Werkzeughälfte des Stahlwerkzeugs mit den Forminnenmaßen 200 mm x 150 mm x 6 mm eingelegt, die Oberfläche mit der Steinschicht zur zweiten Werkzeughälfte zeigend. Nach dem Schließen des Werkzeugs wurde das bei 305 °C aufgeschmolzene transluzent schwarze Polycarbonat-Material mit einem maximalen spezifischen Einspritzdruck von ca. 2000 bar in das Werkzeug auf die transparente Polycarbonatplatte mit der Steinoberfläche eingespritzt. Die Temperatur der Werkzeugwand lag auf der Auswerferseite bei 90 °C, auf der gegenüberliegenden Einspritzseite bei 65 °C. Die Einspritzzeit betrug 2,2 Sekunden. Nach einer Nachdruckzeit von 15 Sekunden (spezifischer Nachdruck: 800 bar) und einer Kühlzeit von 30 Sekunden wurde das Werkzeug geöffnet und das fertige Formteil mit einer Gesamtdicke von etwa 6 mm entnommen.

Für eine Beleuchtung der Formkörper wurden diese in eine Lichtbox eingespannt, welche für die Aufnahme von Platten mit den Maßen 200 mm x 150 mm gefertigt wurde. Diese Lichtbox besitzt einen rund um die Platte laufenden LED Streifen für die Kantenbeleuchtung sowie eine rückseitige RGB-LED-Platine für die Hinterleuchtung. Kantenbeleuchtung und Hinterleuchtung können dabei sowohl separat als auch kombiniert betrieben werden. Dabei wurden die zuvor in der Beschreibung genannten Effekte erzielt.

## Patentansprüche

1. LED-Beleuchtungseinheit, umfassend
a) einen Mehrschichtkörper und
b) eine LED-Lichtquelle,
wobei der Mehrschichtkörper die folgende Schichten in dieser Reihenfolge umfasst:
a1) eine Trägerschicht aus einer thermoplastischen Zusammensetzung,
a2) eine Steinschicht,
a3) eine transparente Schicht aus einer thermoplastischen Zusammensetzung mit einer über die gesamte Fläche gemittelten Dicke von 1 bis 6 mm, welche auf der Seite der Steinschicht a2 liegt, welche die Sichtseite des Mehrschichtkörpers in der LED-Beleuchtungseinheit darstellt,
und
wobei die LED-Lichtquelle an mindestens einer Seitenkante der transparenten Schicht a3 so angeordnet ist, dass die transparente Schicht a3 als Lichtleiter für von der LED-Lichtquelle abgestrahltes Licht nutzbar ist.

2. LED-Beleuchtungseinheit nach Anspruch 1, **dadurch gekennzeichnet, dass** die Zusammensetzung der Trägerschicht a1 und/oder die Zusammensetzung der transparenten Schicht a3 auf aromatischem Polycarbonat basiert/basieren.

3. LED-Beleuchtungseinheit nach Anspruch 1 oder 2, **dadurch gekennzeichnet, dass** die Steinschicht a2 ein zusammenhängendes Korngefüge aufweist.

4. LED-Beleuchtungseinheit nach einem der vorhergehenden Ansprüche, **dadurch gekennzeichnet, dass** die Steinschicht a2 zumindest an der der transparenten Schicht a3 zugewandten Flachseite eine Topographie aufweist, deren maximale Rauheit R_{z} vorzugsweise wenigstens 0,1 µm beträgt, wobei die maximale Rauheit R_{z} bestimmt wird wie in der Beschreibung definiert.

5. LED-Beleuchtungseinheit nach einem der vorhergehenden Ansprüche, **dadurch gekennzeichnet, dass** die Dicke der Trägerschicht a1, gemittelt über die gesamte Fläche der Trägerschicht, 0,5 bis 6 mm beträgt.

6. LED-Beleuchtungseinheit nach einem der vorhergehenden Ansprüche, **dadurch gekennzeichnet, dass** die transparente Schicht a3 die Steinschicht a2 weitestgehend vollflächig abdecktund/ oder dass die Trägerschicht a1 die Steinschicht a2 vollflächig abdeckt oder an wenigstens einer Seitenkante überragt.

7. LED-Beleuchtungseinheit nach einem der vorhergehenden Ansprüche, **dadurch gekennzeichnet, dass** die LED-Lichtquelle so angeordnet ist, dass zumindest ein Teil des von der LED-Lichtquelle abgestrahlten Lichtes an den Grenzflächen der transparenten Schicht a3 mit der Steinschicht a2 und/oder der transparenten Schicht a3 mit der Umgebungsluft bzw. einer ggf. weiter außen liegenden zusätzlichen transparenten Schicht des Mehrschichtkörpers totalreflektiert wird.

8. LED-Beleuchtungseinheit nach einem der vorhergehenden Ansprüche, **dadurch gekennzeichnet, dass** der Mehrschichtkörper eine von einer Platte abweichende Geometrie aufweist.

9. LED-Beleuchtungseinheit nach einem der vorhergehenden Ansprüche, **dadurch gekennzeichnet, dass** die thermoplastische Zusammensetzung der Trägerschicht a1 eine transluzent-schwarze Zusammensetzung ist.

10. LED-Beleuchtungseinheit nach einem der vorhergehenden Ansprüche, **dadurch gekennzeichnet, dass** die LED-Beleuchtungseinheit eine zweite LED-Lichtquelle aufweist, welche so angeordnet ist, dass sie als Hinterleuchtung für den Mehrschichtkörper dient.

11. LED-Beleuchtungseinheit nach einem der vorhergehenden Ansprüche, **dadurch gekennzeichnet, dass** der Mehrschichtkörper mindestens eine Schutzschicht mit einer Kratzfestbeschichtung auf Polysiloxanbasis aufweist und/ oder dass der Mehrschichtkörper neben optional vorhandenen Schutzschichten keine weiteren Schichten aufweist und/ oder dass die Steinschicht a2 eine Buntschiefer-, Glimmerschiefer-, Kalkstein-, Sandstein- und/oder Marmorschicht ist.

12. LED-Beleuchtungseinheit nach einem der vorhergehenden Ansprüche, **dadurch gekennzeichnet, dass** der Anteil an aromatischem Polycarbonat in der thermoplastischen Zusammensetzung der Trägerschicht a1 und/oder der transparenten Schicht a3 mindestens 90 Gew.-% beträgt.

13. LED-Beleuchtungseinheit nach einem der vorhergehenden Ansprüche, **dadurch gekennzeichnet, dass** die LED-Beleuchtungseinheit ein Element zur Ausbildung eines Fußbodenbelags, zum Möbelbau, ein Wandpaneel, ein Türpaneel, Teil einer Lampe, ein Beleuchtungselement, ein Gehäuse von Haushalts- oder Elektrogeräten oder ein Element aus dem Automobilbereich ist.

14. LED-Beleuchtungseinheit nach einem der vorhergehenden Ansprüche, **dadurch gekennzeichnet, dass** die LED-Beleuchtungseinheit ein Element aus dem Automobilbereich ist, und zwar ein Beleuchtungselement, ein Teil einer Innenraumverkleidung, ein Teil eines Armaturenbretts, ein Teil einer Instrumententafel, eine Zierleiste, eine Einstiegsleiste, ein Teil einer Armauflage oder ein Teil einer Mittelkonsole.

## Claims

1. LED lighting unit comprising
a) a multilayer body and
b) an LED light source,
wherein the multilayer body comprises the following layers in this sequence:
a1) a carrier layer of a thermoplastic composition,
a2) a stone layer,
a3) a transparent layer of a thermoplastic composition having an average thickness over the total area of 1 to 6 mm, on the face of the stone layer a2 that constitutes the visible face of the multilayer body in the LED lighting unit,
and
wherein the LED light source is disposed at at least one lateral edge of the transparent layer a3 such that the transparent layer a3 is utilizable as light guide for light emitted by the LED light source.

2. LED lighting unit according to Claim 1, **characterized in that** the composition of the carrier layer a1 and/or the composition of the transparent layer a3 is/are based on aromatic polycarbonate.

3. LED lighting unit according to Claim 1 or 2, **characterized in that** the stone layer a2 has a coherent grain microstructure.

4. LED lighting unit according to any of the preceding claims, **characterized in that** the stone layer a2, at least on the flat side facing the transparent layer a3, has a topography having maximum roughness R_{z} of preferably at least 0.1 µm, wherein the maximum roughness R_{z} is determined as defined in the description.

5. LED lighting unit according to any of the preceding claims, **characterized in that** the thickness of the carrier layer a1, averaged over the total area of the carrier layer, is 0.5 to 6 mm.

6. LED lighting unit according to any of the preceding claims, **characterized in that** the transparent layer a3 covers the stone layer a2 over very substantially its full area, and/or **in that** the carrier layer a1 covers the stone layer a2 over its full area or projects beyond it at at least one lateral edge.

7. LED lighting unit according to any of the preceding claims, **characterized in that** the LED light source is disposed such that at least some of the light emitted by the LED light source is totally reflected at the interfaces of the transparent layer a3 with the stone layer a2 and/or of the transparent layer a3 with the ambient air or any additional transparent layer of the multilayer body further to the outside.

8. LED lighting unit according to any of the preceding claims, **characterized in that** the multilayer body has a geometry other than that of a sheet.

9. LED lighting unit according to any of the preceding claims, **characterized in that** the thermoplastic composition of the carrier layer a1 is a translucent black composition.

10. LED lighting unit according to any of the preceding claims, **characterized in that** the LED lighting unit has a second LED light source arranged in such a way that it serves as backlighting for the multilayer body.

11. LED lighting unit according to any of the preceding claims, **characterized in that** the multilayer body includes at least one protective layer having a polysiloxane-based scratch-resistant coating, and/or **in that** the multilayer body does not have any further layers aside from optional protective layers, and/or **in that** the stone layer a2 is a coloured slate layer, mica shale layer, limestone layer, sandstone layer and/or marble layer.

12. LED lighting unit according to any of the preceding claims, **characterized in that** the proportion of aromatic polycarbonate in the thermoplastic composition of the carrier layer a1 and/or of the transparent layer a3 is at least 90% by weight.

13. LED lighting unit according to any of the preceding claims, **characterized in that** the LED lighting unit is an element for formation of a floor, for furniture making, a wall panel, a door panel, part of a lamp, a lighting element, a housing of domestic appliances or electrical equipment, or an element from the automotive sector.

14. LED lighting unit according to any of the preceding claims, **characterized in that** the LED lighting unit is an element from the automotive sector, specifically a lighting element, part of interior trim, part of a dashboard, part of an instrument panel, a decorative strip, a doorsill strip, part of an armrest or part of a centre console.

## Revendications

1. Unité d'éclairage à DEL, comprenant
a) un corps multicouche et
b) une source lumineuse à DEL,
dans laquelle le corps multicouche comprend les couches suivantes dans cet ordre :
a1) une couche de support constituée d'une composition thermoplastique,
a2) une couche de pierre,
a3) une couche transparente constituée d'une composition thermoplastique présentant une épaisseur moyenne sur toute la surface de 1 à 6 mm, laquelle se situe sur le côté de la couche de pierre a2 qui constitue la face visible du corps multicouche dans l'unité d'éclairage à DEL,
et
la source lumineuse à DEL étant disposée sur au moins un bord latéral de la couche transparente a3 de telle sorte que la couche transparente a3 soit utilisable en tant que guide de lumière pour la lumière émise par la source lumineuse à DEL.

2. Unité d'éclairage à DEL selon la revendication 1, **caractérisée en ce que** la composition de la couche de support a1 et/ou la composition de la couche transparente a3 est/sont à base de polycarbonate aromatique.

3. Unité d'éclairage à DEL selon la revendication 1 ou 2, **caractérisée en ce que** la couche de pierre a2 présente une structure de grains cohérente.

4. Unité d'éclairage à DEL selon l'une quelconque des revendications précédentes, **caractérisée en ce que** la couche de pierre a2 présente, au moins sur la face plane tournée vers la couche transparente a3, une topographie dont la rugosité maximale R_{z} est de préférence d'au moins 0,1 µm, la rugosité maximale R_{z} étant déterminée comme défini dans la description.

5. Unité d'éclairage à DEL selon l'une quelconque des revendications précédentes, **caractérisée en ce que** l'épaisseur de la couche de support a1, moyennée sur toute la surface de la couche de support, est de 0,5 à 6 mm.

6. Unité d'éclairage à DEL selon l'une quelconque des revendications précédentes, **caractérisée en ce que** la couche transparente a3 recouvre la couche de pierre a2 dans une large mesure sur toute la surface et/ou **en ce que** la couche de support a1 recouvre la couche de pierre a2 sur toute la surface ou dépasse de celle-ci sur au moins un bord latéral.

7. Unité d'éclairage à DEL selon l'une quelconque des revendications précédentes, **caractérisée en ce que** la source lumineuse à DEL est disposée de telle sorte qu'au moins une partie de la lumière émise par la source lumineuse à DEL subit une réflexion totale aux interfaces de la couche transparente a3 avec la couche de pierre a2 et/ou de la couche transparente a3 avec l'air ambiant ou, le cas échéant, avec une couche transparente supplémentaire du corps multicouche située plus à l'extérieur.

8. Unité d'éclairage à DEL selon l'une quelconque des revendications précédentes, **caractérisée en ce que** le corps multicouche présente une géométrie autre qu'une plaque.

9. Unité d'éclairage à DEL selon l'une quelconque des revendications précédentes, **caractérisée en ce que** la composition thermoplastique de la couche de support a1 est une composition noire translucide.

10. Unité d'éclairage à DEL selon l'une quelconque des revendications précédentes, **caractérisée en ce que** l'unité d'éclairage à DEL présente une deuxième source lumineuse à DEL qui est disposée de telle sorte qu'elle sert de rétroéclairage pour le corps multicouche.

11. Unité d'éclairage à DEL selon l'une quelconque des revendications précédentes, **caractérisée en ce que** le corps multicouche présente au moins une couche de protection dotée d'un revêtement anti-rayures à base de polysiloxane et/ou **en ce que** le corps multicouche ne présente aucune autre couche outre des couches de protection éventuellement présentes et/ou **en ce que** la couche de pierre a2 est une couche de schiste coloré, de micaschiste, de calcaire, de grès et/ou de marbre.

12. Unité d'éclairage à DEL selon l'une quelconque des revendications précédentes, **caractérisée en ce que** la proportion de polycarbonate aromatique dans la composition thermoplastique de la couche de support a1 et/ou de la couche transparente a3 est d'au moins 90 % en poids.

13. Unité d'éclairage à DEL selon l'une quelconque des revendications précédentes, **caractérisée en ce que** l'unité d'éclairage à DEL est un élément destiné à la formation d'un revêtement de sol, à la fabrication de meubles, un panneau mural, un panneau de porte, une partie d'une lampe, un élément d'éclairage, un boîtier d'appareils ménagers ou électriques ou un élément du secteur automobile.

14. Unité d'éclairage à DEL selon l'une quelconque des revendications précédentes, **caractérisée en ce que** l'unité d'éclairage à DEL est un élément du secteur automobile, à savoir un élément d'éclairage, une partie d'un habillage intérieur, une partie d'un tableau de bord, une partie d'un combiné d'instruments, une baguette décorative, un seuil de porte, une partie d'un accoudoir ou une partie d'une console centrale.
